# EUROPEAN PATENT SPECIFICATION

(11) **EP 0 659 336 B1**
(45) Date of publication and mention of the grant of the patent: **08.07.1998**
(21) Application number: 94203693.0
(22) Date of filing: 20.12.1994
(51) Int. Cl.: A01K 1/00

(54) **Cubicle assembly for heavy livestock**
Liegeboxtrennbügel für Rindvieh
Séparation de stalles pour bovins

(30) Priority: 20.12.1993 NL 9302212
(43) Date of publication of application: 28.06.1995
(73) Proprietor: REDNIPS HOLDING B.V., 9281 Le Harkema (NL)
(72) Inventor: Spinder, Pieter, NL-9281 LE Harkema (NL)
(74) Representative: Ferguson, Alexander

(56) References cited:
- EP-A- 0 437 298
- CH-A- 226 864
- DE-U- 8 524 590
- NL-A- 8 005 338
- US-A- 1 994 193

## Description

The invention relates to a cubicle assembly for heavy livestock. In suchlike cubicle assemblies the cow shed is divided by means of cubicle partitions divided into a series of cubicles located next to one another. The cubicle partitions are usually formed by frameworks, which are either supported by a leg on the shed floor or on the cubicle bed or attached to the shed wall at the end facing away from the entrance to the cubicle or to continuous structure members such as fastening pipes extending transverse to the cubicle partitions, in which case these are so-called leg-free cubicle partitions.

Cubicles are part of a so-called lying box or cubicle shed, also called a loose housing. The cows are fed at a location remote from the lying boxes or cubicles, and after feeding can walk through walking and dung channels to a lying box or cubicle where they can lie down for ruminating. A cubicle assembly as described in the preamble of claim 1 is known from EP-A-437 298

Usually a shoulder beam which extends in a direction transverse to the partitions is attached to the upper side of the cubicle partitions in order to ensure that a cow, which has entered a cubicle, will use the space concerned for lying. This shoulder beam is located at such a height that if the cow moves headfirst from the entrance side or rear of the cubicle towards the front or head side of the cubicle, it will touch this beam and thereby will be forced downward, at which it will lower its knees for lying down. If the cubicle partitions are not attached to a shed wall, generally at the head end another elongated structure member extending transversely to the cubicle partitions will be arranged which is called a head beam and forms a front boundary for the space of movement of the cow's head for forcing the cow into a lying position in conjunction with the shoulder beam by providing a visual obstacle for the cow and for preventing the cow from shifting itself up too far in the cubicle in which case its rear would not be in a desired position any more as regards the dung removing means located at the rear side.

It has appeared that if after a while the cow wants to stand up again, it will be troubled by the shoulder beam. Here a consideration is also that the cow, when standing up, will first of all stretch its hind legs and only after that its front legs. In the case of restless livestock it can often happen that a cow feels threatened from behind when standing up and consequently makes an uncontrolled forward movement. If during this manoeuvre it then touches the underside of the shoulder beam with it's shoulder, it will fall forward onto it's knees again and cannot then stand up again on account of lack of space at its front side.

It is an object of the invention to provide a cubicle assembly for heavy livestock in which this problem no longer occurs.

For this purpose the invention provides a cubicle assembly for heavy livestock as described in claim 1. Here the shoulder beam generally applied is thus omitted so that the cow is no longer hindered by structure members in the cubicle located above it and can therefore move freely in a vertical sense. In this way not only is the above mentioned problem solved, but the well-being of the animals is aided at the same time, as they know themselves to be unhindered in that direction. The function of the shoulder beam, steering into a lying position, is here substantially taken over by suitable means at or near the lying bed of the cubicle.

Because the space above the animals is free they can now even take up a particular position which up to now was not possible in cubicles for heavy livestock. In this position the animals just stand with their hind legs in the dung channel, which is at the entrance or rear side of the cubicles, and with their front legs on the cubicle bed. This position is especially pleasant for the animals when they have just eaten, because the lungs are released from the (full) rumen, or are at least less burdened by it. The lungs are given more room so that the ruminating cow can take up more oxygen, which helps the metabolic process. In the normal, horizontal position and in the lying position of the animals the lungs would be distressed by a full rumen, the tendency of the animals to remedy this by standing aslant can be observed in the field, in particular in hilly terrain. In customary cubicles, however, this is not or almost not possible for the animals. There the animals can indeed stand upright with their front legs on the relatively high cubicle bed, but due to the presence of the shoulder beam they cannot advance far into the cubicle whilst retaining their standing position, with the result that their hindquarters have to remain for the greater part in the dung channel and will restrict the space of movement of the other animals in a disturbing way there. They will then be forced into a cubicle and forced by the shoulder beams into a lying position. In the cubicle assembly according to the invention this problem no longer exists. Moreover, as a consequence of the cubicle bed usually sloping upwards, the animals can stand relatively higher with their front legs so that the trim or inclined position is increased and the lungs will feel even freer. Consequently the cubicle assembly according to the invention will, in this way too, contribute to the well-being of the animals. It could also be said that this cubicle assembly is the first cubicle assembly in which the animals can also stand upright, in a sense of their own free choice, so that it is, in fact, a standing cubicle.

The leg impeding means are preferably formed by an elongated structure member extending to above the cubicle bed, such as a pipe extending above the cubicle bed or a beam placed on the cubicle bed. Here it is preferred that this elongated structure member reaches to above 15 to 25 cm above the cubicle bed. Preferably the elongated structure member is disposed at a distance of approximately 1.5 to 2m from the rear end of the cubicle bed, preferably approximately 1.7 - 1.9. The cow will then not want to go any further and will then lower its front legs and then its hind legs, having obtained sufficient cubicle bed length to be able to take up a comfortable lying position, with its hindquarters in a position with respect to the dung channel which is desirable as regards to dung discharge.

It is noted that arranging a sill on the floor of the cubicle bed is known per se and that arranging a floating knee beam in cubicles is also known. With both structures an attempt is made to prevent the generally very agile young cows or young livestock from moving up too much in the relatively spacious cubicle and then getting into a position in which they might foul the cubicle bed too much with their excrement, and at the same time, and this also applies to heavy livestock, to prevent the animals from touching the shoulder beam with their backs when standing up, so incurring the risk of breaking their backs. These animals are quite agile and are not impaired in their movements by a heavy udder.

The invention will now be described on the basis of some embodiments which are shown merely by way of example in the accompanying drawing, in which:
Fig. 1 shows a part or an element of a first embodiment of the cubicle assembly according to the invention;
fig. 2 shows a picture in accordance with figure 1 of a second embodiment of the cubicle assembly;
fig. 3 shows an illustration in accordance with fig. 1 of a third embodiment of the cubicle assembly according to the invention;
fig. 4 shows a picture in accordance with fig. 1, of a fourth embodiment of the cubicle assembly according to the invention; and
fig. 5 shows a schematic representation of the movement of a heavy livestock cow whilst standing up.

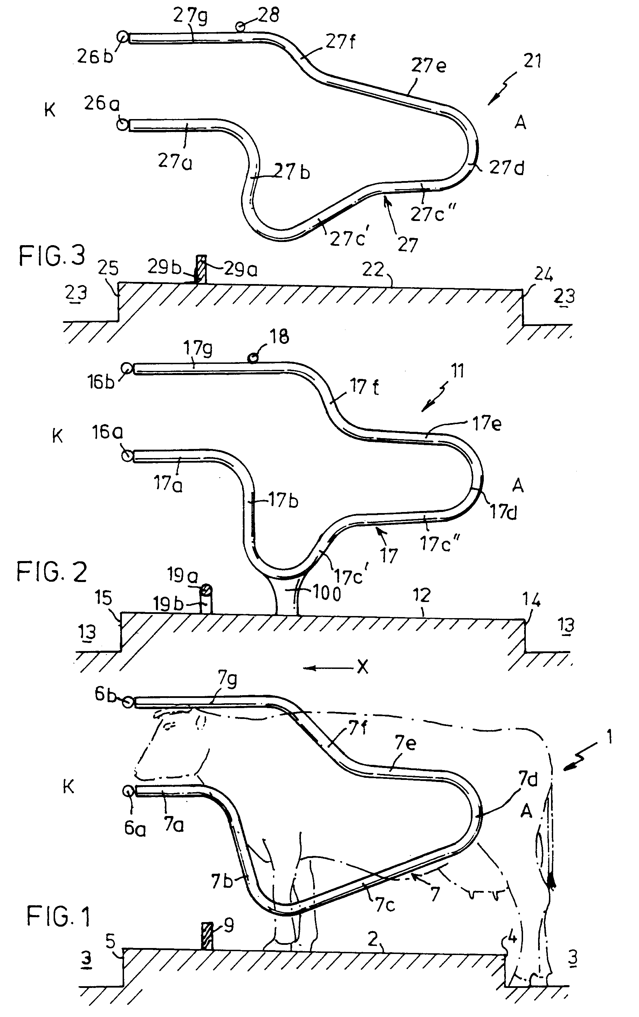

In figure 1 a part of a cubicle assembly 1 is shown. The single-rowed cubicle assembly 1 comprises a number of cubicle partitions 7, which are placed at a distance from one another such that the cows come to lie fairly straight in the cubicle. If the cows can lie askew there is a risk of the teats being trodden on by the cow itself or by other cows. When there is too little room the cow can, however, only get up with difficulty, likewise with the risk of the teats being trodden on. In the second place the partition offers support for the heavy cows whose legs are relatively weak. The partitions are formed by essentially vertically placed frameworks 7 formed by tubes, which are attached at the side shown on the left in the drawing to fastening pipes 6a and 6b which extend in the main direction of the shed where the cubicle assembly is placed and extend, in this case, perpendicular to the plane of the drawing. These pipes 6a and 6b are fixedly mounted by means of posts, not shown or other means, at suitable intervals. The pipe 6a also functions as head beam. The portion of the shed floor shown here comprises a passage way and entrance path 3 with dung discharge and a sloping lying bed 2 which forms the floor of the cubicles, and which is raised by, for example, 15 and 18 cm in regard of the passage 3 at the rear side or entrance side A by means of sill 4 and at the end side or head side K by means of sill 5, respectively. The passage 3 shown on the left hand side of the drawing is, for example, intended for providing access to another series of cubicles, not shown.

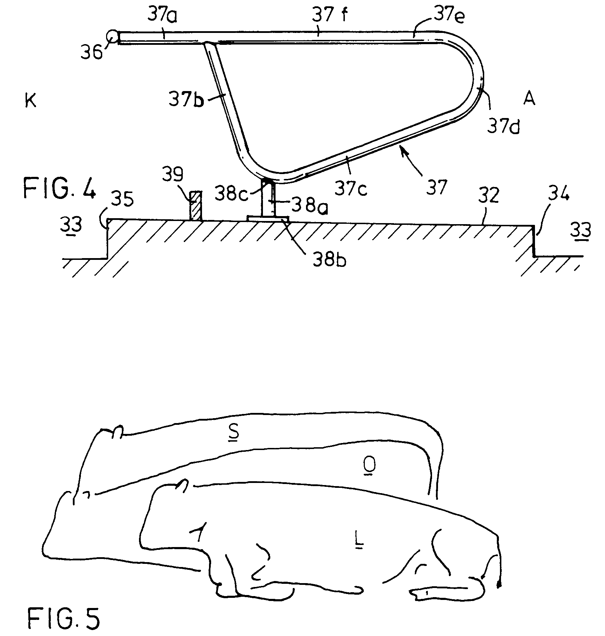

The stability of the cubicle partition can be increased by known means. A leg could be considered (see, for example, figures 2 and 4) or a transverse rod passing relatively high above the partitions (not shown), which is connected by vertical rods to the rear of the cubicle partition. The connections with the pipes 6a and 6b could also be designed to be spring like.

The cubicle partition 7 comprises two pipe portions 7a and 7g extending substantially in a horizontal direction from fastening pipes 6a and 6b to the entrance side. With its underside the pipe 7a is spaced at a height of 80 cm above the level of the cubicle bed 2 near the sill 5 and the pipe portion 7g is spaced with its upper side at approximately 1.50 m above that cubicle bed level. After approximately 60 cm the pipe portion 7a merges into a pipe portion 7b extending obliquely downwards and rearwards, the pipe portions 7a and 7b leaving a side opening free, through which the cow, if in a recumbent position, can move with its head. When the pipe portion 7b has neared the surface of the cubicle bed 2 up to approximately 1/4 m, the pipe 7 is then bent to a pipe portion 7c extending obliquely upwards and backwards. By doing so space is created for the recumbent cow in a sideward direction, so that it gets extra space for the ribs and the rumen, but still it is prevented that the cow can lie entirely cross-wise.

On the rear side, at a horizontal distance of at most a 1/4 m from the sill 4, the pipe 7 merges via pipe portion 7d over into a slightly upwardly inclining and forwardly extending pipe portion 7e. In this example the pipe portion 7e then merges into a pipe portion 7f which is more upwardly inclined, and connects to the said pipe portion 7g. The distance between the rear surface of tube portion 7d and the front surface of pipe 6a/6b is here between 1.8 and 2.1 m.

So that the cow will use the cubicle in the intended manner, a beam 9 is attached to the cubicle bed 2 by means not shown but otherwise known at approximately a distance of 1.7 - 1.9 m from the sill 4 , i.e. at a distance which is smaller than the distance between the front and hind legs of the cow concerned. This beam 9 has a height of approximately 15 to 25 cm and ensures that because of its location viz-a-viz the sill 4 and in conjunction with the head beams 6a and 6b, that the cow, when walking in the direction X into the cubicle, will lower its front legs before the beam and will lie down in the position shown by L (see figure 5). If the cow, for whatever reason, wants to stand up again, it will then stretch its hind legs first and take up the position O, see figure 5. Then it will stretch its front legs to arrive at the standing position S, but meanwhile not come into contact with any structure member above it. Consequently the cow will neither be injured or wounded, nor, as far as its behaviour is concerned, will it have to reckon with any impeding structure members being present, which prevents further secondary reactive behaviour which might cause even more injury.

The fact that there are no structure members perceptible to the cow at all in the space above the cow has a further favourable effect on its behaviour and well-being.

The average dimensions of a heavy livestock cow are now a length of ca. 2.5 m, a trunk length of ca. 1.65 m, a length of diagonal body measurement of ca. 1.55 m and a height at withers of ca. 1.45 m. Peaks upward (1.60 m) and downward (1.30 m) in height at withers occur. The present tendency of ever larger cows will continue in the coming years, even allowing for a future attainable height at withers of 1.65 m, in fact.

In the figures 2, 3 and 4 other embodiments of cubicle assemblies according to the invention are shown, in the main the same reference numbers being used for corresponding parts, however with other decimal numerals.

The part of the cubicle assembly 11 shown in figure 2 comprises a tubular cubicle partition 17, which differs from the cubicle partition 7 of figure 1 by the vertical course of the pipe portion 17b, by the bent design of the pipe portion 17c', 17c''(as a result of which more room is provided for the cow's abdomen), and by the elongated design of the pipe portion 17g and thus in connection with that the smaller angle between the pipe portions 17f and 17g. The lower side of the cubicle partition 17 is supported on the cubicle bed 12 by means of a leg 100, which is fixedly attached to the cubicle partition 17 and on the cubicle bed 12. In addition, instead of a beam a pipe 19a extending at a distance above the cubicle bed surface is provided, which is supported at suitable distances by upright pipe parts 19b attached on the cubicle bed 12.

In this case a pipe 18 which extends parallel to the fastening pipes 16a and 16b is attached to the pipe portion 17g. The adjacent other cubicle partitions 17 are also attached to this pipe 18, which serves merely for increasing the fixed arrangement of the cubicle partitions 17, and in particular the resistance thereof against bending in the horizontal plane. This pipe 18 is, as shown in the drawing, located outside the area which is covered by the cow which belongs to the category of heavy livestock, and is also shown. The pipe 18 is located at 1.30 - 1.70 m above the cubicle bed, depending on the breed of heavy livestock concerned and above the height at withers of the cow.

The part of the cubicle assembly 21 shown in figure 3 differs from that which is shown in figure 1 especially in that the pipe portion 27b extends for a part downwards and towards the head side, the pipe portion 27a and the pipe portion 27b near the pipe portion 27a leaving more space for the cow. In addition the pipe portion 27c is built up of two pipe portions 27c' and 27c '', which are at angle viz-a-viz each other, which is somewhat slighter than that of the pipe portions 17c' and 17c'' of figure 2. Again a stiffening pipe 28 is attached to the pipe portion 27g, extending parallel to the fastening pipes 26a and 26b. At 170-190 cm from the sill 24, moreover, a beam 29a extending in a direction transverse to the plane of the drawing, is attached by means of angle 29b irons to the cubicle bed 22.

Finally a part of the cubicle assembly 31 according to the invention is shown in figure 4, the cubicle partition 37 of which is attached on the head side to an attaching pipe 36, and passes from there in a backward direction and in a substantially horizontal direction by means of a pipe portion 37a, until a pipe portion 37b which inclines in a pronounced way downwards and backwards branches off from there, which pipe portion is bent 1/4 m from the surface of the cubicle bed 32 into a pipe portion 37c extending obliquely upwards and backwards. Pipe portion 37c merges at the rear end via a curve portion 37d into a pipe portion 37e which inclines slightly upwards and extends to the head end, which pipe portion passes smoothly into horizontally located portion 37f, which passes smoothly into the pipe portion 37a. Here a second fastening pipe is missing, but the stability of the cubicle partition is ensured by the leg 38a, which is attached to the cubicle bed 32 by means of foot 38b and is attached by welds 38c to the cubicle partition 37.

## Claims

1. Cubicle assembly (1; 11; 21; 31) for heavy livestock, comprising a number of partition members, such as frameworks (7; 17; 27; 37), for dividing the cubicles for the animals, wherein for stiffening the partition members are connected to one another by means of connecting means (18; 28) which are located outside the range of movement of the body of the animal concerned, further comprising means for steering the animal concerned to a lying position, characterized in that said steering means comprise leg impeding means (9; 19a; 29a; 39), which are arranged on or nearby the cubicle bed (2; 12; 22; 32).

2. Cubicle assembly according to claim 1, wherein the area between the partition members (7; 17; 27; 37), that is covered by the movement of the shoulder and the back of the animal concerned is free of connecting means between the partition members.

3. Cubicle assembly according to claim 2, wherein the lower limit of that area is at a height of 1.30 to 1.70 m above the cubicle bed (2; 12; 22; 32).

4. Cubicle assembly according to any one of the preceding claims, wherein the leg impeding means are formed an elongated structure member which extends above the cubicle bed, such as a pipe (19a) extending above the cubicle bed or a beam (9; 29; 39) placed on the cubicle bed.

5. Cubicle assembly according to claim 4, wherein the elongated structure member (9; 19a; 29; 39) extends up to 15 to 25 cm above the cubicle bed.

6. Cubicle assembly according to claim 4 or 5, wherein the elongated structure member (9; 19a; 29; 39) is disposed at approximately 1.5 to 2 m, preferably 1.7-1.9 m from the rear end of the partition members (7; 17; 27; 37).

7. Cubicle assembly according to any one of the preceding claims, wherein the partition members (7; 17; 27; 37) are connected to one another by an upper beam.

8. Cubicle assembly according to any one of the preceding claims, wherein the means for steering the animal to a lying position comprise means, which form a visible obstacle or the animal arranged at the front of the cubicle (1; 11; 21; 31).

9. Cubicle assembly according to claim 8, wherein the said means comprise a head beam, cubicle wall or the like.

10. Cubicle assembly according to any one of the preceding claims, wherein the cubicle bed (2; 12; 22; 32) slopes upwards from the rear to the front.

## Patentansprüche

1. Liegeboxanordnung (1; 11; 21; 31) für Großvieh, mit einer Anzahl Trennteile wie Rahmen (7, 17; 27; 37) zur Aufteilung der Liegeboxe für die Tiere, wobei zur Versteifung die Trennteile mittels außerhalb des Bewegungsbereiches des betreffenden Tierkörpers angeordneten Verbindungsmittel (18; 28) miteinander verbunden sind, ferner mit Mitteln zum Steuern des betreffendes Tieres in eine Liegeposition, **dadurch gekennzeichnet**, daß dieses Steuermittel auf oder nahe dem Liegeboxboden (2; 12; 22; 32) angeordneten Beinhinderungsmittel (9; 19a; 29a; 39) aufweisen.

2. Liegeboxanordnung nach Anspruch 1, wobei der Raum zwischen den Trennteilen (7; 17; 27; 37), das mit der Schulter- und Rückenbewegung des betreffenden Tieres erreicht wird, von Verbindungsmitteln zwischen den Trennteilen frei ist.

3. Liegeboxanordnung nach Anspruch 2, wobei sich die Unterbegrenzung jenes Raumes sich auf einer Höhe von 1.30 bis 1,70 m. oberhalb des Liegeboxbodens (2; 12; 22; 32) befindet.

4. Liegeboxanordnung nach irgendeinem der vorhergehenden Ansprüche, wobei die Beinhinderungsmittel durch einen sich oberhalb des Liegeboxbodens erstreckenden länglichen Konstruktionsteil gebildet sind, wie ein sich oberhalb des Liegeboxbodens erstreckendes Rohr (19a) oder einen auf dem Liegeboxboden aufgestellten Riegel (9; 29: 39).

5. Liegeboxanordnung nach Anspruch 4, wobei der längliche Konstruktionsteil (9; 19a; 29; 39) sich um 15 bis 25 cm oberhalb des Liegeboxbodens erstreckt.

6. Liegeboxanordnung nach Anspruch 4 oder 5, wobei der längliche Konstruktionsteil (9; 19a; 29; 39) ungefähr 1.5 bis 2 m, vorzugsweise 1.7 - 1.9 m vom Hinterende der Trennteile (7; 17; 27; 37) aufgestellt ist.

7. Liegeboxanordnung nach irgendeinem der vorgehenden Ansprüche, wobei die Trennteile (7; 17; 27; 37) durch einen Oberriegel miteinander verbunden sind.

8. Liegeboxanordnung nach irgendeinem der vorgehenden Ansprüche, wobei die Mittel zum Steuern des Tieres in eine Liegeposition Mittel aufweisen, die ein für das Tier sichtbares und am Eingang des Liegeboxes (1; 11; 21; 31) aufgestelltes Hindernis bilden.

9. Liegeboxanordnung nach Anspruch 8, wobei die besagten Mittel einen Hauptriegel, eine Liegeboxwand oder dergleichen umfassen.

10. Liegeboxanordnung nach irgendeinem der vorgehenden Ansprüche, wobei der Liegeboxboden (2; 12; 22; 32) nach oben von der Hinter- zur Vorderseite neigt.

## Revendications

1. Ensemble de logettes (1; 11; 21; 31) pour du bétail lourd comprenant un nombre d'organes de séparation, tels que des ossatures (7 ; 17 ; 27 ; 37) pour diviser les stalles pour les animaux, dans lequel, à des fins de renfort, des organes de séparation sont raccordés l'un à l'autre par des moyens (18 ; 28) de raccordement qui sont situés à l'extérieur de la portée de mouvement du corps de l'animal concerné, comprenant en outre des moyens pour guider l'animal concerné vers une position couchée, caractérisé en ce que lesdits moyens de guidage comprennent des moyens d'entrave de patte (9 ; 19a ; 29a ; 39) qui sont agencés sur ou à proximité de la couche de stalle (2 ; 12 ; 22 ; 32).

2. Ensemble de logettes selon la revendication 1, caractérisé en ce que la zone entre les organes de séparation (7 ; 17 ; 27 ; 37), qui est couverte par le mouvement des épaules et du dos de l'animal concerné, est dépourvue de moyens de raccordement entre les organes de séparation.

3. Ensemble de logettes selon la revendication 2, dans lequel la limite inférieure de cette zone est à une hauteur de 1,30 à 1,70 m au-dessus de la couche de stalle (2 ; 12 ; 22 ; 32).

4. Ensemble de logettes selon l'une quelconque des revendications précédentes, dans lequel les moyens d'entrave de patte sont formées d'un organe de structure allongé qui s'étend au-dessus de la couche de stalle, tel qu'un tuyau (19a) s'étendant au-dessus de la couche de stalle ou une poutre (9 ; 29 ; 39) placée sur la couche de stalle.

5. Ensemble de logettes selon la revendication 4, dans lequel l'organe de structure allongé (9 ; 19a ; 29 ; 39) s'étend vers le haut jusqu'entre 15 et 25 cm au-dessus de la couche de stalle.

6. Ensemble de logettes selon la revendication 4 ou 5, dans lequel l'organe de structure allongé (9 ; 19a ; 29 ; 39) est disposé à approximativement entre 1,5 et 2 m, de préférence entre 1,7 et 1,9 m, de l'extrémité arrière des organes de séparation (7 ; 17 ; 27 ; 37).

7. Ensemble de logettes selon l'une quelconque des revendications précédentes, dans lequel les organes de séparation (7 ; 17 ; 27 ; 37) sont raccordés l'un à l'autre par une poutre supérieure.

8. Ensemble de logettes selon l'une quelconque des revendications précédentes, dans lequel les moyens pour guider l'animal vers une position couchée comprennent des moyens, qui forment un obstacle visible pour l'animal, agencés au niveau de l'avant de la stalle (1 ; 11 ; 21 ; 31).

9. Ensemble de logettes selon la revendication 8, dans lequel lesdits moyens comprennent une poutre frontale, une paroi de logette ou analogue.

10. Ensemble de logettes selon l'une quelconque des revendications précédentes, dans lequel la couche de stalle (2 ; 12 ; 22 ; 32) s'incline vers le haut depuis l'arrière vers l'avant.
